# EUROPEAN PATENT SPECIFICATION

(11) **EP 0 290 266 B1**
(45) Date of publication and mention of the grant of the patent: **20.10.1993**
(21) Application number: 88304110.5
(22) Date of filing: 06.05.1988
(51) Int. Cl.: G09F 13/04, G09F 13/18

(54) **Elevated back-lit display**
Erhöht aufgestellte, von der Rückseite beleuchtbare Anzeige
Enseigne soulevée, éclairée par derrière

(30) Priority: 08.05.1987 US 47643
(43) Date of publication of application: 09.11.1988
(73) Proprietor: MINNESOTA MINING AND MANUFACTURING COMPANY, St. Paul, Minnesota 55133-3427 (US)
(72) Inventor: Dreyer, John F., Jr. c/o Minnesota Mining and, P.O. Box 33427 St. Paul Minnesota 55133 (US)
(74) Representative: Baillie, Iain Cameron

(56) References cited:
- EP-A- 0 167 721
- EP-A- 0 236 030
- FR-A- 1 135 371
- GB-A- 2 145 760

## Description

### Technical Field

The present application relates to back-lit displays, and more particularly to elevated displays having easily accessible light sources.

### Background Art

In a common type of advertising display a light source is positioned behind a translucent screen containing graphic information. Such displays are commonly known as back-lighted displays. Typically the light sources in such displays include one or more tube type discharge lamps. A disadvantage of such displays lies in the difficulty of providing even illumination of the display area without considerable light loss. Portions of the translucent screen which are close to one of the discharge tubes will be more brightly illuminated than those portions between the tubes.

A second disadvantage of such displays arises when they are placed atop a support column which allows them to be viewed from extended distances. When lighting tubes in such elevated signs must be replaced, a truck with a boom is normally used so that maintenance personnel may reach the sign. Thus, routine maintenance of such signs can be very difficult and expensive.

Some kind of background art is disclosed in GB-A-2 145 760 and EP-A-0 167 721.

### Disclosure of Invention

In the invention an elevated sign is supported by a support column. Light from a light source at the base of the column is conducted through a light conduit into an optical chamber. The optical chamber has at least one optical window which is covered by a structured surface film which allows limited portions of the light impinging thereon to escape from the chamber. A translucent film, that may contain graphic information, overlies the structured surface film.

### Brief Description of Drawings

Figure 1 is a general view of an elevated display according to the invention;
Figure 2 is an expanded view of the base of the support column for the elevated display of Figure 1;
Figure 3 is a drawing of the total internal reflection film which may be used in the invention;
Figure 4 is an expanded view of the top of the support column and the main optical cavity of the elevated display of Figure 1 with parts broken away to show interior elements;
Figure 5 is a schematic view of the optical cavity shown in Figure 4; and
Figure 6 is a view of the smaller optical cavities of the elevated display of Figure 1.

### Detailed Description

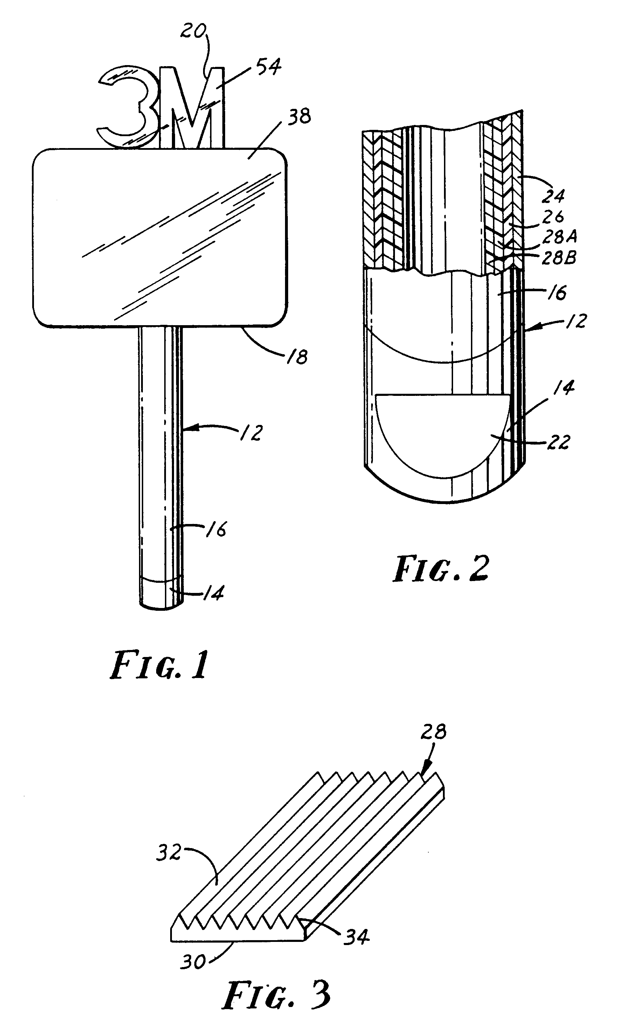

An elevated back-lit display of the invention is illustrated in Figure 1. The sign of Figure 1 includes a support column 12 which, in turn, includes a light source portion 14 and a light conduit portion 16. A top support column 12 is an optical cavity 18. Optical cavity 18 is typically generally rectangular, although it may be of any desired shape. Optionally, additional smaller optical cavities 20, may sit on top of optical cavity 18. Typically the smaller optical cavity 20 will form a logo or other distinguishing mark related to the product or company which the sign is intended to advertise.

Figure 2 is an expanded view of a portion of support column 12. Light source 14 of support column 12 includes a lamp 22. Lamp 22 may, for example, be a high intensity discharge lamp.

Light conduit 16 includes an outer rigid portion 24, that provides the strength to support optical cavity 18. Typically rigid wall 24 is of an opaque material, although a transparent or translucent material could be used if light emission from support column 12 is desired.

Inside rigid wall 24 is a reflective material 26. Reflective material 26 may be a highly specularly reflecting material such as the reflective tape sold under the trade name "Silverlux" by Minnesota Mining and Manufacturing Company. Alternatively, reflective material 26 could be a diffusely reflecting dielectric material. Bonded webs of nonwoven polyolfin fibers have been found to be very effective. Reflective layer 26 may be omitted entirely if desired, and should be omitted if light is to be allowed to escape through rigid wall 24.

Inside reflective material 26 is a light conduit comprising layers 28A and 28B. Layers 28A and 28B are typically a single sheet of light conduit material which is wrapped around the interior of support column 12 twice to provide a double layer, although a single layer will function adequately. The use of a double layer provides some optical improvement in increasing the percentage of the light which is transmitted along the light conduit. More importantly, however, the use of a double layer helps to force the light conduit formed by light conduit material 28A and 28B into a circular cross section rather than a tear drop shape. Layers 28A and 28B could be eliminated if layer 26 is of a highly specularly reflecting material. In that case layer 26 would act as the light conduit.

Figure 3 illustrates the material which forms light conduit 28A and 28B of Figure 2 in greater detail. Light conduit material 28 is a film having a smooth surface 30 and a structured surface 32. The structures on structured surface 32 form triangular prisms such as prism 34. Preferably the prisms on structured surface 32 form right isosceles triangles, although other shapes have been shown to be effective. Such a film is often known as a total internal reflection film because light is confined to the interior of a light conduit of such a material by total internal reflection from the triangular prisms. In use film 28 is wrapped inside support column 12 with structured surface 32 to the outside. The prisms on structured surface 32 are arranged so that the principle axes of the prisms run along the length of support column 12.

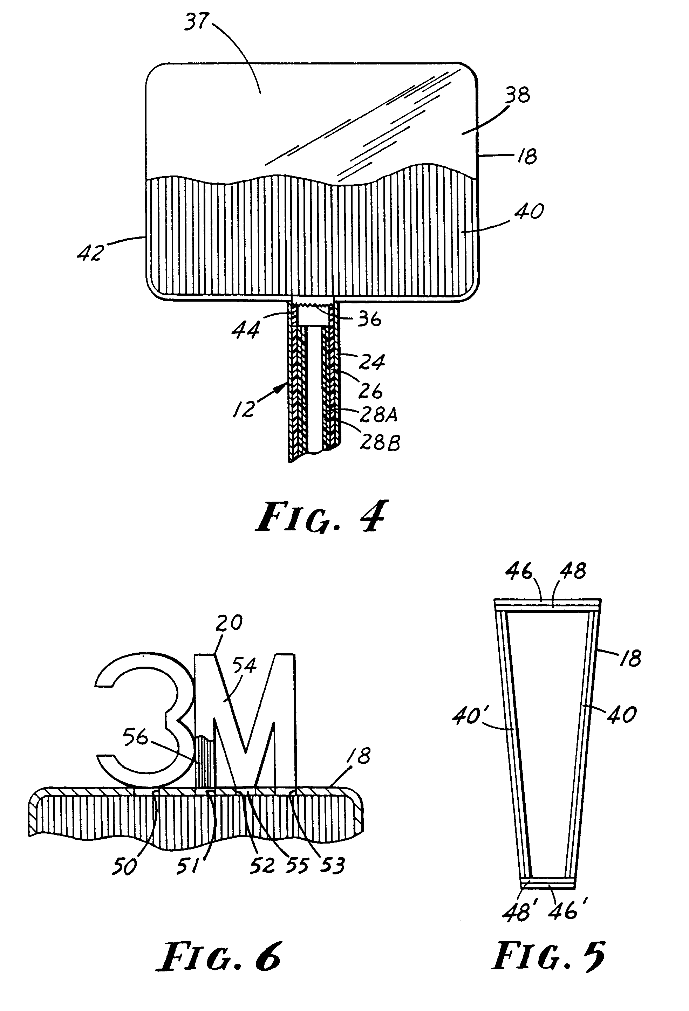

Figure 4 illustrates the upper portion of support column 12 and optical cavity 18. Support column 12 includes rigid wall 24, reflector 26 and light conduit layers 28A and 28B. After the light emerges from the light conduit formed by light conduit layers 28A and 28B it strikes beam spreader 36. Beam spreader 36 may be any device which will cause the light to be dispersed throughout optical cavity 18. In the preferred embodiment, a film similar to film 28 of Figure 3 is used. An identical film may be used, but experimentation has shown that a film having prisms forming isosceles triangles with an angle of 120° is preferable.

Optical cavity 18 has an optical window 37. Covering the optical window 37 is translucent film 38 which overlies a layer of total internal reflection film 40. Total internal reflection film 40 is similar to the film shown in Figure 3. The axes of the prisms of the structured surface of film 40 run parallel to the direction of support column 12 with the structured surface adjacent to translucent film 38 and the smooth surface facing the interior of optical cavity 18. The purpose of structured film 40 is to control the light leakage from optical cavity 18 so that all portions of translucent film 38 are uniformly illuminated. This method has proven very effective in providing uniform illumination of the sign.

Typically the height and length of optical cavity 18 is considerably greater than the thickness. This is because such signs are generally designed to be viewed from two sides. The sidewall 42 of optical cavity 18 is therefore usually opague. Therefore, edge 42 may have a reflective material applied thereto. Any of the reflective materials described for use in reflective layer 26 of support column 12 may also be used to cover edge 42. The use of such a reflective material on edge 42 will help improve the uniformity of light distribution throughout optical cavity 18.

The portion of support column 12 immediately adjacent to optical cavity 18 has an optically absorbing material 44 applied thereto. Optically absorbing material 44 helps to remove any light traveling at large angles relative to the axis of support column 12. Removing such rays further increases the uniformity of light distribution in optical cavity 18.

Figure 5 shows an end view of optical cavity 18. As may be seen from Figure 5, optical cavity 18 maybe tapered so that it is wider at the top than at the bottom. Such tapering helps to remove the effect of any high angle light which is not captured by optically absorbing material material 44 of Figure 4. This further improves the uniformity of light distribution in optical cavity 18. As described with regard to edge 42 of Figure 4, the top and bottom of optical cavity 18 include opague portions 46 and 46' respectively and reflective materials 48 and 48', respectively.

The smaller optical cavities 20 are constructed similarily to optical cavity 18. Light enters smaller optical cavities 20 through openings 50, 51, 52 and 53. Preferably openings 50, 51, 52 and 53 have light diffusing materials such as light diffuser 55 positioned therein. Such diffusers increase the spread of light entering small optical cavities 20. Optical windows in smaller optical cavities 20 are covered with a translucent material 54 overlying total internal reflection film 56. As in optical cavity 18 the edges of smaller optical cavities 20 may be covered with a reflective material to improve the uniformity of light distribution therein.

## Claims

1. An elevated, back-lit display having a support column (12) and means defining an optical cavity (18) having an optical window (37) on top of said support column (12), said display characterized in that it further comprises:
a light source (22) and a light conduit (16) in said support column (12), said light source (22) being positioned to emit light into said light conduit (16);
a transparent film (40) having a smooth side and a structured side positioned in said optical window (37), said structured side facing the exterior of said optical cavity (18), said structured surface having a plurality of triangular prisms (34) thereon, the axes of said prisms running parallel to the direction of said support column (12);
a translucent layer (38) overlying said transparent film (40); and
a beam spreader (36) for dispersing light entering said optical cavity (18) from said support column (12).

2. The display of Claim 1 wherein beam spreader comprises a transparent film having a smooth side and a structured side, said structured side having a plurality of triangular prisms thereon, said structured side facing the interior of said optical cavity.

3. The display of Claim 1 wherein said light conduit comprises a film having a smooth surface and a structured surface, said structured surface having a plurality of triangular prisms thereon, said structured surface being on the exterior of said light conduit, the axes of said prisms running parallel to said support column.

4. The display of Claim 1 further comprising:
means defining a second optical cavity having an optical window, said second optical cavity adjacent and in optical communication with said first optical cavity;
a transparent film having a smooth surface and a structured surface in said second optical cavity optical window, said structured surface having thereon a plurality of triangular prisms, said structured surface facing the exterior of said second optical cavity.

5. The display of Claim 4 further comprising light diffusing means between said first optical cavity and said second optical cavity.

6. The display of Claim 1 wherein a least a portion of the interior of said support column is coated with light absorbing means in the region of said support column closest to said optical cavity.

## Patentansprüche

1. Erhöht aufgestellte, von der Rückseite beleuchtbare Anzeige mit einer Tragesäule (12) und mit einer Einrichtung, die einen optischen Hohlraum (18) definiert, der auf der genannten Tragesäule (12) ein optisches Fenster (37) aufweist, dadurch gekennzeichnet, daß die genannte Anzeige ferner folgendes umfaßt:
eine Lichtquelle (22) und eine Lichtleitung (16) in der genannte Tragesäule (12), wobei die genannte Lichtquelle (22) so positioniert ist, daß sie Licht in die genannte Lichtleitung (16) strahlt;
ein transparenter Film (40), der eine glatte Seite und eine gerippte Seite aufweist, wobei der Film in dem genannten optischen Fenster (37) positioniert ist, dadurch gekennzeichnet, daß die genannte gerippte Seite zu dem Äußeren des genannten optischen Hohlraums (18) ausgerichtet ist und wobei die genannte gerippte Oberfläche eine Mehrzahl von Dreiecksprismen (34) darauf aufweist, wobei die Achsen der genannte Prismen parallel zu der Richtung der genannten Tragesäule (12) verlaufen;
eine lichtdurchlässige Schicht (38), welche den genannten transparenten Film (40) überlagert; und
eine Strahlsteuerungseinrichtung (36) zur Zerstreung des Lichts, das von der genannten Tragesäule (12) in den genannten optischen Hohlraum (18) eintritt.

2. Anzeige nach Anspruch 1, dadurch gekennzeichne, daß die Strahlsteuerungseinrichtung einen transparenten Film mit einer glatten Seite und mit einer gerippten Seite aufweist, wobei die genannte gerippte Seite eine Mehrzahl von Dreiecksprismen darauf aufweist, wobei die genannte gerippte Seite zu dem Inneren des genannten optischen Hohlraums ausgerichtet ist.

3. Anzeige nach Anspruch 1, dadurch gekennzeichnet, daß die genannte Lichtleitung einen Film mit einer glatten Oberfläche und mit einer gerippten Oberfläche aufweist, wobei die genannte gerippte Oberfläche darauf eine Mehrzahl von Dreiecksprismen aufweist, wobei die genannte gerippte Oberfläche sich an der Außenseite der genannten Lichtleitung befindet, dadurch gekennzeichnet, daß die Achsen der genannten Prismen parallel zu der genannten Tragesäule verlaufen.

4. Anzeige nach Anspruch 1, dadurch gekennzeichnet, daß die Anzeige ferner folgendes umfaßt:
eine Einrichtung zur Definierung eines zweiten optischen Hohlraums mit einem optischen Fenster, wobei sich der genannte zweite optische Hohlraum neben und in optischer Verbindung mit dem genannten ersten optischen Hohlraum befindet;
einen transparenten Film mit einer glatten Oberfläche und mit einer gerippten Oberflache in dem genannten optischen Fenster des zweiten optischen Hohlraums, wobei die gerippte Oberfläche darauf eine Mehrzahl von Dreiecksprismen aufweist, wobei die genannte gerippte Oberfläche zum Äußeren des genannten zweiten optischen Hohlraums ausgerichtet ist.

5. Anzeige nach Anspruch 4, dadurch gekennzeichnet, daß die Anzeige ferner zwischen dem genannten ersten optischen Hohlraum und dem genannten zweiten optischen Hohlraum eine Lichtdiffusionseinrichtung aufweist.

6. Anzeige nach Anspruch 1, dadurch gekennzeichnet, daß mindestens ein Teil des Inneren der genannten Tragesäule mit einer lichtabsorbierenden Einrichtung beschichtet ist, und zwar in dem Bereich der genannten Tragesäule, welcher dem genannten optischen Hohlraum an nahesten ist.

## Revendications

1. Enseigne surélevée éclairée par l'arrière comprenant une colonne de support (12) et des moyens définissant une cavité optique (18) munie d'une fenêtre optique (37) ménagée au sommet de la colonne de support (12), ledit afficheur étant caractérisé en ce qu'il comprend en outre :
- une source de lumière (22) et un conduit de lumière (16) ménagé dans ladite colonne de support (12), ladite source de lumière étant positionnée pour émettre de la lumière dans ledit conduit de lumière (16) ;
- un film transparent (40) ayant un côté lisse et un côté nervuré qui est positionné dans ladite fenêtre optique (37), ledit côté nervuré étant en regard de l'extérieur de ladite cavité optique (18), ladite surface nervurée étant munie d'une pluralité de prismes triangulaires (37), les axes desdits prismes étant parallèles à la direction de ladite colonne de support (12) ;
- une couche transparente (38) recouvrant ledit film transparent (40) et
- un diffuseur de faisceau (36) pour disperser la lumière entrant dans ladite cavité optique (18) et provenant de ladite colonne de support (12).

2. Enseigne selon la revendication 1, dans lequel le diffuseur de faisceau comprend un film transparent comportant un côté lisse et un côté nervuré, ledit côté nervuré étant, pourvu d'une pluralité de prismes triangulaires et disposé en regard de l'intérieur de la cavité optique.

3. Enseigne selon la revendication 1, dans lequel ledit conduit de lumière comprend un film comportant une surface lisse et une surface nervurée, ladite surface nervurée étant pourvue d'une pluralité de prismes triangulaires et disposée a l'extérieur dudit conduit de lumière, les axes desdits, prismes étant parallèles à ladite colonne de de support.

4. Enseigne selon la revendication 1, comprenant en outre :
- des moyens définissant une deuxième cavité optique munie d'une fenêtre optique, ladite deuxième cavité optique étant, près de et communiquant optiquement avec ladite première cavité optique ;
- un film transparent comportant une surface lisse et une surface nervurée dans ladite deuxième cavité optique, ladite surface structurée étant pourvue d'une pluralité de prismes triangulaires et étant en regard de l'extérieur de ladite deuxième cavité optique.

5. Enseigne selon la revendication 4, comprenant en outre des moyens de diffusion de lumière entre la première cavité optique et la deuxième cavité optique.

6. Enseigne selon la revendication 1, dans lequel au moins uné partie de l'intérieur de ladite colonne de support est revêtue par des moyens d'absorption de lumière, dans la région de la colonne de support la plus proche de ladite cavité optique.
